# EUROPÄISCHE PATENTSCHRIFT

(11) **EP 1 669 308 B1**
(45) Veröffentlichungstag und Bekanntmachung des Hinweises auf die Patenterteilung: **15.10.2008**
(21) Anmeldenummer: 05026795.4
(22) Anmeldetag: 08.12.2005
(51) Int. Cl.: B65G 1/08, B65G 47/88

(54) **Verfahren und Vorrichtung zur Bestückung und Entnahme von Lagergut von Regalfächern eines Lagerregals**
Method and device for loading and unloading goods from shelves of a storage rack
Procédé et dispositif pour chargement et déchargement des marchandises des rayonnages d'un stockage

(30) Priorität: 10.12.2004 DE 102004059809
(43) Veröffentlichungstag der Anmeldung: 14.06.2006
(73) Patentinhaber: Lang, Hartmut, 73249 Wernau (DE); Lang, Tobias H., 72622 Nürtingen (DE)
(72) Erfinder: Lang, Hartmut, 73249 Wernau (DE); Lang, Tobias H., 72622 Nürtingen (DE)
(74) Vertreter: Rüger, Barthelt & Abel Patentanwälte

(56) Entgegenhaltungen:
- EP-A- 0 096 505
- US-B1- 6 409 449

## Beschreibung

Die Erfindung betrifft ein Verfahren und eine Vorrichtung zur Bestückung und Entnahme von in Behältern, Schachteln oder Verpackungen unterschiedlicher Größe aufbewahrtem Lagergut mittels eines Regalbediengerätes aus Regalfächern eines Lagerregals gemäß der Oberbegriffen der Ansprüche 1 und 5, aus der US-B1-6 409 449 bekannt, das insbesondere in Apotheken, Drogerien, Warenhäusern oder dergleichen Handelseinrichtung vorgesehen ist.

Bekannt sind derartige Lagerregale aus der Praxis als sogenannte Ziehschränke, in denen die mit Fachböden ausgebildeten Zieheinsätze längsverschieblich aufgehängt sind. Diese klassischen Ziehschränke benötigen sehr viel Platz, wobei vielfach innerhalb der Ziehschränke ungenutzter Raum vorhanden ist. Ein weiterer Nachteil dieser Einrichtungen besteht darin, dass diese Schränke nicht für eine automatisierte Bestückung und Entnahme des Lagergutes auf eine Beförderungseinrichtung vorgesehen sind. Aus der DE 101 40 958 A1 ist ein Regallager mit Schiebern in den Regalfächern bekannt, wobei jedem Regalfach ein Schieber zugeordnet ist, der ständig im Regalfach verbleibt und in dem Regalfach parallel zum Beschickungsweg geführt ist. Mit einem vor jedes Regalfach bewegten Regalbediengerät wird das Lagergut dann von dem Lagerregalfach zu der Ausgabestation transportiert, wobei auf dem Regalbediengerät Antriebsmittel zur Bewegung des Schiebers vorgesehen sind, die mit dem Antrieb des Regalbediengerätes zur Beförderung des Lagergutes aus einem Lagerregal gekoppelt sind. Aus der DE 199 46 781 A1 ist weiterhin ein Bediengerät für ein Regallager bekannt, das auf seiner Oberseite eine Rinne besitzt, auf der entweder der Produktträger mit den Produkten oder ein auszugebendes Produkt allein abgelegt werden kann. Mittels eines Betätigungsfingers, der durch einen Spalt in der Rinne des Bediengerätes nach oben geschwenkt werden kann, lassen sich der Produktträger bzw. die ohne Produktträger lose auf dem Regalfach liegenden Verpackungen zwischen einem Regalfach und dem Regalbediengerät hin und her verschieben. In der DE 198 44 896 A1 wird ein Verfahren und eine Vorrichtung zur Handhabung von stückigem Gut, insbesondere Arzneimitteln beschrieben, wobei der Regalboden mit Vertiefungen in Form von Gassen oder mit Schlitzen versehen ist und die Entnahmefront, die Vorderfront des Regals offen ist, so dass zur Gutaufnahme ein Manipulator, der mit zu den Vertiefungen korrespondierenden Fingern ausgestattet ist, unter das in der Regalmulde befindliche Gut zur Handhabung gebracht werden kann.

Aus der US-B1-6,409,449 ist zudem eine Kommissionieranlage mit Schnelldrehautomat und Regalbediengerät bekannt. Mit dieser Kommissionieranlage ist ein Einlagern von Artikeln in Schnelldrehautomaten und gegebenenfalls ein zweckmäßiges Bereitstellen von einzulagernden Artikeln ermöglicht. Hierzu besitzt die Kommissionieranlage ein raumbewegliches Regalbediengerät mit einer Artikelhandhabe-Einheit, die sorten- bzw. dimensionsgleiche Artikel stapelweise magazinlos einlagert, wobei ein einzulagernder Artikelstapel ohne separates Artikelstapel-Magazin oder -behältnis durch das Regalbediengerät gleichzeitig gehandhabt wird und die Artikelhandhabe-Einheit eine bodenseitige Artikelstapel-Aufnahme, einen verstellbaren Artikelstapel-Längsschieber, einen verstellbaren Artikelstapel-Querschieber und eine insbesondere eine Reihe von Federfingern aufweisende verstellbare Artikelstapel-Längsklemmplatte aufweist, welche parallel zur und gegenüber der Artikelstapel-Aufnahme liegt und in eingeklemmtem Zustand einen direkt aufgenommen Artikelstapel durch die Artikelstapel-Längsklemmenplatte, insbesondere durch deren Federfinger, in Stapelquerrichtung gegen die Artikelstapel-Aufnahme drückt. Zudem ist am Regalbediengerät eine Einheit vorgesehen, die jeweils mit einem, das Herausrutschen von Lagergut/Artikel aus den Regalfächern verhindernden Anschlag an den Regalfächern zusammenwirkt. Nachteilig an dieser Kommissionieranlage ist, dass das Lagergut/Artikel nur stapelweise eingelagert bzw. entnommen werden kann und dass die federartig ausgebildeten Anschläge der Regalfächer relativ schnell eine Materialermüdung zeigen und somit störanfällig sind.

Es ist Aufgabe der vorliegenden Erfindung, ein Verfahren und eine Vorrichtung zur Bestückung und Entnahme von Lagergut aus Regalfächern eines Lagerregals zu schaffen, mit denen die beschriebenen Nachteile vermieden werden und das Lagergut eines Lagerregals einfach, schnell und sicher mittels eines Regalbediengerätes entnommen und wieder zurückgelegt werden kann.

Gelöst wird diese Aufgabe durch ein Verfahren und eine Vorrichtung zur Bestückung und Entnahme von in Behältern, Schachteln oder Verpackungen unterschiedlicher Größe aufbewahrtem Lagergut mittels eines Regalbediengerätes aus Regalfächern eines Lagerregals, gemäß den Ansprüchen 1 und 5. Vorteilhafte Weiterbildungen sind in den nachgeordneten Ansprüchen 2 bis 19 beschrieben.

Vorteilhaft ist, dass ein oder mehrere Teile des Lagergutes gegen den Schieber rutschen und von dem Regalbediengerät aufgenommen werden, wobei unterschiedliche Entnahmegeschwindigkeiten vorgesehen sind.

Eine vorteilhafte Variante wird darin gesehen, dass die Entnahme des Lagergutes unten an der Lagerfacheinheit und die Bestückung des Lagerregals mittels eines zweiten Regalbediengerätes von dem entgegenliegenden oberen Endabschnitt der Lagerfacheinheit erfolgt, entweder gleichzeitig oder zeitlich nacheinander.

Eine weitere bevorzugte Variante wird darin gesehen, dass die Entnahme des Lagergutes aus der Lagerfacheinheit durch Betätigung der Lagerfachschiene an deren oberen Endabschnitt erfolgt und dass die Bestückung der Lagerfacheinheit mit Lagergut vom oberen, an der Lagerregalstange schwenkbeweglich gehaltenen Endabschnitt durchgeführt wird. Bei der Entnahme fallen alle Waren einer Lagerfacheinheit auf ein Förderband.

Die mit dem neuen Verfahren zur Bestückung und Entnahme von Lagergut aus Regalfächern eines Lagerregals mittels eines Regalbediengerätes erzielten Vorteile werden durch die erfindungsgemäße Vorrichtung noch weiter ausgebaut.

Bevorzugt ist vorgesehen, dass der Lagerfachwinkel der Lagerfacheinheit eine Grundfläche aufweist, wobei an deren einem Ende die Abwinkelung zur Lagerung angeformt ist und an dem gegenüberliegenden Ende nach oben abgewinkelte und durch eine Nut getrennte Anschläge vorgesehen sind.

Die auf dem Lagerfachwinkel angeordnete Lagerfachschiene besteht in vorteilhafter Weise aus einer U-Profilschiene mit einem Fachboden und davon gleichgerichtet und rechtwinklig abragenden Seitenwänden, wobei der Fachboden auf seiner Oberseite mindestens eine in Längsrichtung des Fachbodens sich erstreckende und über den Fachboden hinausragende Lasche aufweist.

In einer vorteilhaften Ausführungsform für eine einfache Handhabung durch einen Benutzer ist die Lasche auf dem Fachboden der Lagerfachschiene so befestigt ist, dass die Lasche nach unten und/oder oben aus der Lagerfachschiene herausragt und in einer Nut des Lagerfachwinkels liegt.

Eine ebenso vorteilhafte Variante wird darin gesehen, dass der Fachboden auf seiner Oberseite mehrere in Längsrichtung des Fachbodens sich erstreckende und über den Fachboden hinausragende Laschen aufweist, wobei die am Fachboden nach oben abgewinkelten Anschläge mehrfach geschlitzt ausbildet sind oder der Fachboden weist mehrere einzelne Anschläge auf.

Das erfindungsgemäße Verfahren und die Vorrichtung zur Bestückung und Entnahme von Lagergut aus Regalfächern eines Lagerregals haben den Vorteil, dass das hintereinander, in der zweiteilig ausgebildeten Lagerfacheinheit angeordneten Lagergut einfach, schnell und sicher mittels des Regalbediengerätes durch einen Bediener entnommen und wieder zurückgelegt werden kann, da sowohl durch die Ausbildung der Lagerfacheinheit selbst als auch durch den Schieber des Regalbediengerätes sich Lagergut nicht querstellen oder seitlich herausfallen kann. Durch die zweiteilige Ausbildung der Lagerfacheinheit und dadurch, dass die Lagerfachschiene in ihrem oberen Endabschnitt schwenkbeweglich gehalten ist, können unterschiedliche Varianten der Entnahme und Bestückung mit Lagergut vorgenommen werden, abhängig davon, wo das Lagerregal aufgestellt ist und mit welchem Lagergut das Lagerregal bestückt wird. Ein weiterer Vorteil der zweiteiligen Ausbildung der Lagerfacheinheit besteht darin, dass sie sich fertigungstechnisch einfach herstellen und in Abhängigkeit von den Platzverhältnissen vielfach variieren lässt, auch in Bezug auf das aufzunehmende Lagergut.

Die Erfindung wird nachfolgend anhand eines schematisch in Zeichnungen dargestellten Ausführungsbeispieles näher erläutert.
Es zeigen:
- Fig. 1: ein Ausführungsbeispiel einer erfindungsgemäßen Lagerfacheinheit in Draufsicht;
- Fig. 2: einen Ausschnitt der Lagerfacheinheit in Ansicht;
- Fig. 3: einen Ausschnitt der Lagerfacheinheit in Ansicht;
- Fig. 4: ein Ausführungsbeispiel von mehreren Lagerfacheinheiten mit Lagergut in Draufsicht;
- Fig. 5: die Lagerfacheinheit mit einem Regalbediengerät in Sollstellung in Ansicht;
- Fig. 6: das Regalbediengerät beim Entnahmevorgang von Lagergut aus der Lagerfacheinheit in Ansicht;
- Fig. 7: das Regalbediengerät mit dem entnommenen Lagergut in Ansicht.

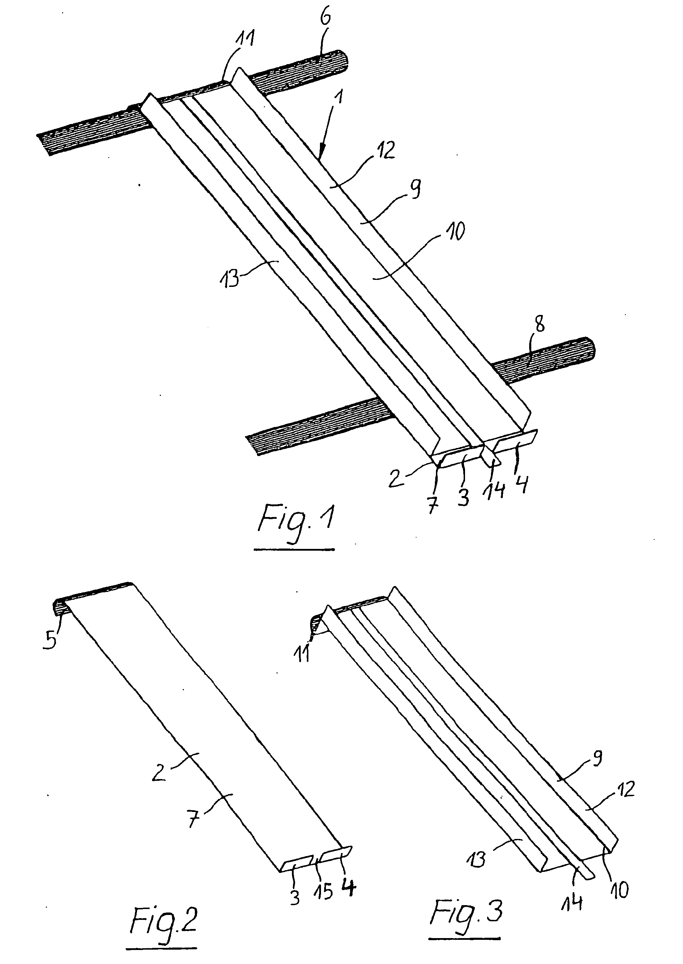

Die Figuren 1, 2 und 3 zeigen die in einem Lagerregal angeordneten neuen, als Lagerfacheinheit 1 ausgebildeten Regalfächer. Die Lagerfacheinheit 1 eines Lagerregals liegt auf insbesondere als Lagerregalstangen 6, 8 ausgebildeten Halterrungen auf und ist zweiteilig ausgebildet. Die Lagerfacheinheit 1 besteht aus einem Lagerfachwinkel 2 gemäß Figur 2 und einer auf dem Lagerfachwinkel 2 angeordneten Lagerfachschiene 9 gemäß Figur 3. Der Lagerfachwinkel 2 und die Lagerfachschiene 9 weisen Abwinkelungen 5, 11 auf, mittels denen sie an der Lagerregalstange 6 kippbar befestigt sind. Der Lagerfachwinkel 2 weist weiterhin eine Grundfläche 7 auf, an deren einem Ende die Abwinkelung 5 angeformt ist und an dem gegenüberliegenden Ende nach oben abgewinkelte und durch eine Nut 15 getrennte Anschläge 3, 4 vorgesehen sind. Die Lagerfachschiene 9 gemäß Figur 3 besteht aus einer U-Profilschiene mit einem Fachboden 10 und davon gleichgerichtet und rechtwinklig abragenden Seitenwänden 12, 13, wobei der Fachboden 10 auf seiner Oberseite eine in Längsrichtung des Fachbodens 10 sich erstreckende und über den Fachboden 10 nach unten hinausragende Lasche 14 aufweist, wobei in einer Sollposition die Lagerfachschiene 9 auf dem Lagerfachwinkel 2 so befestigt ist, dass entsprechend Figur 1 und 3 die Lasche 14 der Lagerfachschiene 9 in der Nut 15 des Lagerfachwinkels 2 liegt und aus dem Lagerfachwinkel 2 herausragt. In einer nicht dargestellten Variante der Ausführungsform der Lagerfacheinheit 1 ist vorgesehen, dass die Lasche 14 nach oben über die Lagerfacheinheit 1 hinausragt, zur Bedienung der Lagerfacheinheit 1 durch ein zweites Regalbediengerät 17.
Eine ebenso vorteilhafte Variante wird darin gesehen, dass der Fachboden 10 auf seiner Oberseite mehrere in Längsrichtung des Fachbodens 10 sich erstreckende und über den Fachboden 10 hinausragende Laschen 14 aufweist, wobei entweder die am Fachboden 10 nach oben abgewinkelten Anschläge 3, 4 mehrfach geschlitzt ausbildet oder mehrere Anschläge vorgesehen sind.

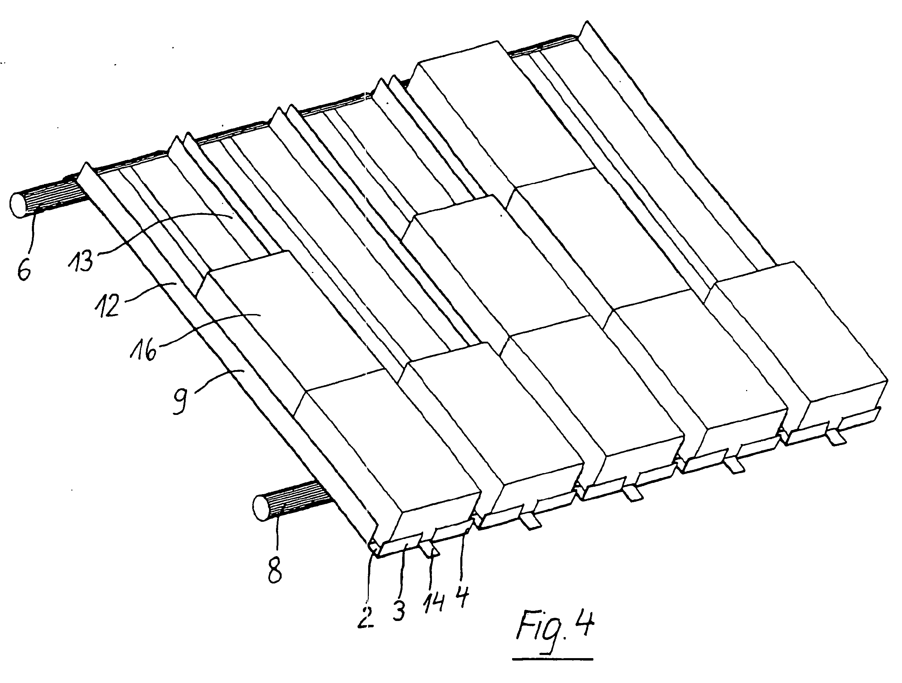

Figur 4 zeigt ein Ausführungsbeispiel von mehreren auf den Lagerregalstangen 6, 8 hintereinander angeordneten Lagerfacheinheiten 1 mit darauf angeordnetem Lagergut 16, das sich beispielsweise in einzelnen Schachteln befindet.

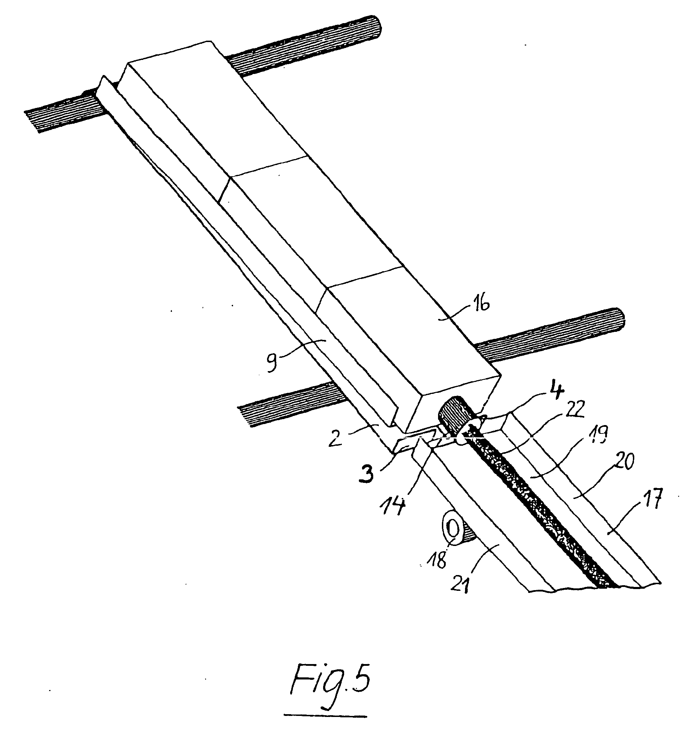

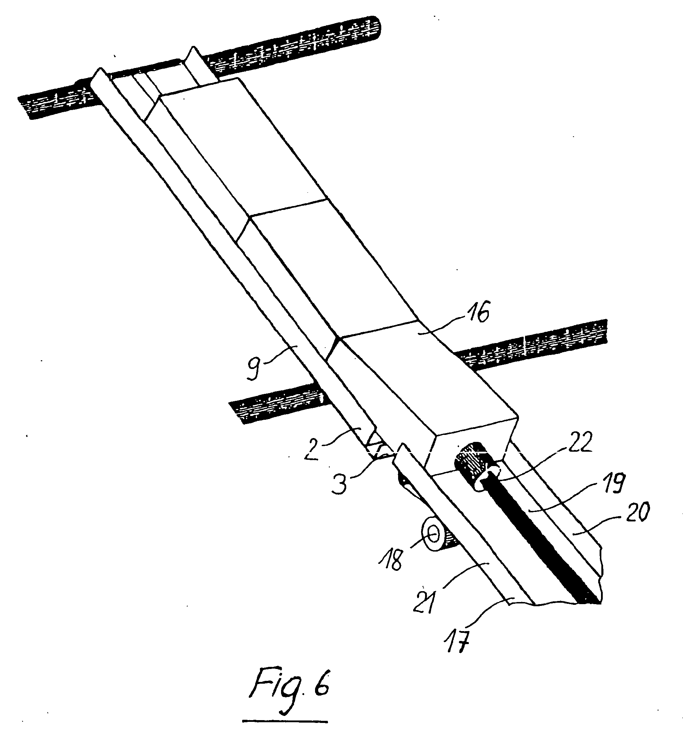

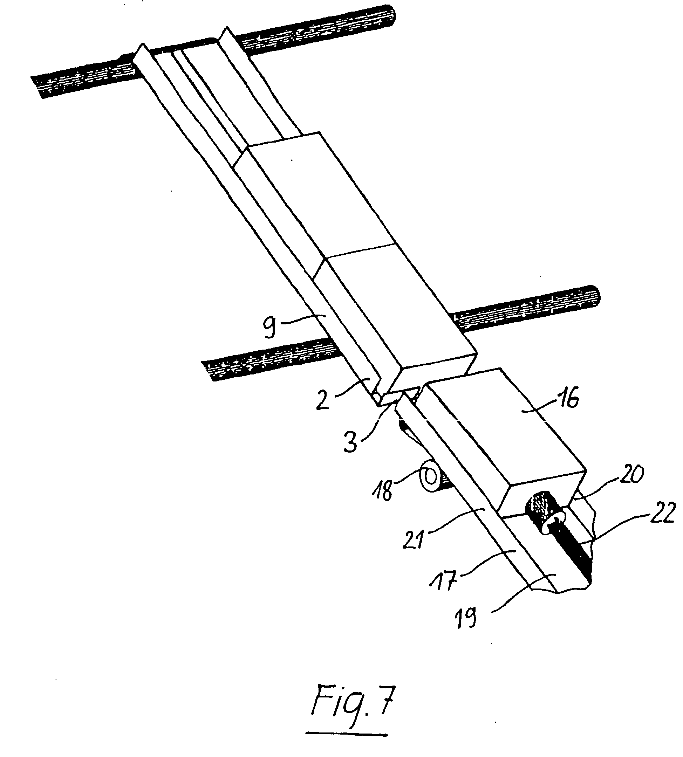

Die Figuren 5, 6 und 7 zeigen die einzelnen Phasen der Entnahme von Lagergut 16 aus der Lagerfacheinheit 1 mittels des Regalbediengerätes 17. Das vor die Lagerfacheinheit 1 geführte Regalbediengerät 17 besteht aus einer Hebevorrichtung 18 und einem als U-Profilschiene ausgebildeten Grundkörper 19 mit gleichgerichtet und rechtwinklig abragenden Seitenwänden 20, 21, wobei in dem Grundkörper 19 des Regalbediengerätes 17 ein längsverschieblich geführter Schieber 22 vorgesehen ist. Die Hebevorrichtung 18 zur Betätigung der Lasche 14 besteht aus einer Welle und einem nicht näher dargestellten mit der Welle verbundenen Winkel oder Steg unter dem Grundkörper 19. Zur Entnahme des Lagergutes 16 aus der Lagerfacheinheit 1 wird die Lagerfacheinheit 1 gemäß Figur 5 mittels der Regalbedieneinheit 17 angefahren und durch die an dem Regalbediengerät 17 vorgesehene Hebevorrichtung 18 rutscht gemäß Figur 6 nach dem Anheben der Lagerfachschiene 9 der Lagerfacheinheit 1 das zu entnehmenden Lagergut 16 auf das Regalbediengerät 17 in eine Sollposition gegen den auf dem Boden des Grundkörpers 19 des Regalbediengeräts 17 angeordneten längsverschieblich gelagerten Schieber 22. Nach dem Absenken der Lagerfachschiene 9 der Lagerfacheinheit 1 und der Zurückführung des Schiebers 22 mit dem aus der Lagerfacheinheit 1 entnommenen und in dem Regalbediengerät 17 liegenden Lagergut 16, wird das restliche Lagergut 16 durch die Anschläge 3 und 4 in der Lagerfacheinheit 1 gehalten. Es können ein oder mehrere Teile des Lagergutes 16 gegen den Schieber 22 rutschen und von dem Regalbediengerät 17 aufgenommen werden. Für die Entnahme und Bestückung der Lagerfacheinheit 1 mit Lagergut 16 sind unterschiedliche Entnahmegeschwindigkeiten vorgesehen. Das zu entnehmende Lagergut 16 wird von dem Schieber 22 des Regalbediengeräts 17 in der Sollposition auf dem Regalbediengerät 17 so gehalten, dass es bis zur Packungslänge in das Regalbediengerät 17 gemäß Figur 7 rutscht. Das auf der Lagerfacheinheit 1 zurückbleibende Lagergut 16 rutscht nach dem Absenken der Lagerfachschiene 9 gegen die auf einem Lagerfachwinkel 2 der Lagerfacheinheit 1 angeordneten Anschläge 3, 4 und wird an diesen anliegend gehalten.

### Bezugsziffernverzeichnis:

- 1: Lagerfacheinheit
- 2: Lagerfachwinkel
- 3: Anschlag
- 4: Anschlag
- 5: Abwinkelung am Lagerfachwinkel
- 6: Lagerregalstange
- 7: Grundfläche des Lagerfachwinkels
- 8: Lagerregalstange
- 9: Lagerfachschiene
- 10: Fachboden
- 11: Abwinkelung am Fachboden
- 12: Seitenwand der Lagerfachschiene
- 13: Seitenwand der Lagerfachschiene
- 14: Lasche
- 15: Nut
- 16: Lagergut
- 17: Regalbediengerät
- 18: Hebevorrichtung
- 19: Grundkörper des Regalbediengerätes
- 20: Seitenwand des Grundkörpers
- 21: Seitenwand des Grundkörpers
- 22: Schieber

## Patentansprüche

1. Verfahren zur Bestückung und Entnahme von in Behältern, Schachteln oder Verpackungen unterschiedlicher Größe aufbewahrtem Lagergut (16) mittels eines Regalbediengerätes (17) aus Regalfächern eines Lagerregals, die je eine geneigt angeordnete zweiteilig ausgebildete Lagerfacheinheit (1) sind, mit einem im Wesentlichen U-förmigen Querschnitt und einem Anschlag (3, 4) an deren tiefst gelegenen Ende,
bei dem das Regalbediengerät (17) zur Entnahme des Lagergutes (16) aus der Lagerfacheinheit (1) und/oder zur Bestückung der Lagerfacheinheit (1) mit Lagergut (16) an eine Seite in Längsrichtung an die Lagerfacheinheit (1) herangeführt wird und der Anschlag (3, 4) durch das Regalbediengerät (17) zeitweilig außer Wirkung gesetzt wird, sodass das zu entnehmenden Lagergut (16) auf einen Boden eines Grundkörpers (19) des Regalbediengeräts (17) und gegen einen dort angeordneten längsverschieblich gelagerten Schieber (22) rutscht, bis es (16) eine Sollposition erreicht,
**dadurch gekennzeichnet,**
**dass** nach dem Anfahren der Lagerfacheinheit (1) mittels einer an dem Regalbediengerät (17) vorgesehenen Hebevorrichtung (18) durch Anheben einer Lagerfachschiene (9) der Lagerfacheinheit (1) das Außer-Wirkung-Setzen des Anschlages (3, 4) erfolgt
und nach der Zurückführung des Schiebers (22) mit dem aus der Lagerfacheinheit (1) entnommenen Lagergut (16) ein Absenken derselben Lagerfachschiene (9) der Lagerfacheinheit (1) erfolgt, sodass der Anschlag (3, 4) das restliche Lagergut (16) in der Lagerfacheinheit (1) zurückhält.

2. Verfahren nach Anspruch 1,
**dadurch gekennzeichnet,**
**dass** unterschiedliche Entnahmegeschwindigkeiten vorgesehen sind.

3. Verfahren nach Anspruch 1 oder 2,
**dadurch gekennzeichnet,**
**dass** die Entnahme des Lagergutes (16) unten an der Lagerfacheinheit (1) und die Bestückung des Lagerregals mittels eines zweiten Lagerregalbediengerätes (17) von dem entgegenliegenden oberen Endabschnitt der Lagerfacheinheit (1) erfolgt, entweder gleichzeitig oder nacheinander.

4. Verfahren nach Anspruch 1 oder 2,
**dadurch gekennzeichnet,**
**dass** die Bestückung der Lagerfacheinheit (1) mit Lagergut (16) und die Entnahme des Lagergutes (16) aus der selbiger (1) an deren oberen, Endabschnitt erfolgt, wobei bei der Entnahme alle in dieser Lagerfacheinheit (1) enthaltenen Waren durch den Schieber (22) aufwärts geschoben werden und nacheinander gleichzeitig auf ein Förderband fallen.

5. Vorrichtung zur Bestückung und Entnahme von in Behältern, Schachteln oder Verpackungen unterschiedlicher Größe aufbewahrtem Lagergut (16) aus Regalfächern eines Lagerregals mittels eines Regalbediengerätes (17), bei der
das Regalbediengerät (17)
einen Grundkörper (19) zum Handhaben des Lagergutes (16), dem (19) wenigstens eine Seitenwand (20) und ein in dessen Körperlängsrichtung bewegbarer Schieber (22) zugeordnet sind, sowie
eine Einheit (18), zur räumlichen Manipulation an den Regalfächern besitzt
und
am Lagerregal Halterungen für die Regalfächer vorgesehen sind, wobei
die Regalfächer, in deren Köperlängsrichtung gesehen, geneigt angeordnete, rinnenartige Lagerfacheinheiten (1) sind, deren vorderer, tief gelegenen Kante jeweils ein Anschlag (3,4) zugeordnet ist, der das Lagergut (16) am Herausrutschen hindert,
**dadurch gekennzeichnet, dass**
dass die Lagerfacheinheit (1) eines Lagerregals auf insbesondere als Lagerregalstangen (6, 8) ausgebildeten Halterungen aufliegt, wobei die Lagerfacheinheit (1) zweiteilig ausgebildet ist und aus einem Lagerfachwinkel (2) und einer auf dem Lagerfachwinkel (2) angeordneten Lagerfachschiene (9) besteht, und wobei der Lagerfachwinkel (2) und die Lagerfachschiene (9) Abwinkelungen (5, 11) aufweisen, mittels denen sie an der Lagerregalstange (6) kippbar befestigt sind.

6. Vorrichtung nach Anspruch 5,
**dadurch gekennzeichnet,**
**dass** der Lagerfachwinkel (2) eine Grundfläche (7) aufweist, wobei an deren einem Ende die Abwinkelung (5) zur Lagerung angeformt ist und an dem gegenüberliegenden Ende nach oben abgewinkelte und durch eine Nut (15) getrennte Anschläge (3, 4) vorgesehen sind.

7. Vorrichtung nach Anspruch 5 und 6,
**dadurch gekennzeichnet,**
**dass** die Lagerfachschiene (9) aus einer U-Profilschiene mit einem Fachboden (10) und davon gleichgerichtet und rechtwinklig abragenden Seitenwänden (12,13) besteht, wobei der Fachboden (10) auf seiner Oberseite mindestens eine in Längsrichtung des Fachbodens (10) sich erstreckende und über den Fachboden (10) hinausragende Lasche (14) aufweist.

8. Vorrichtung nach Anspruch 7,
**dadurch gekennzeichnet,**
**dass** die Lasche (14) auf dem Fachboden (10) der Lagerfachschiene (9) so befestigt ist, dass die Lasche (14) nach unten und/oder oben aus der Lagerfachschiene herausragt und in einer Nut (15) des Lagerfachwinkels (2) liegt.

9. Vorrichtung nach Anspruch 7,
**dadurch gekennzeichnet,**
**dass** der Fachboden (10) auf seiner Oberseite mehrere in Längsrichtung des Fachbodens (10) sich erstreckende und über den Fachboden (10) hinausragende Laschen (14) aufweist, wobei die am Fachboden (10) nach oben abgewinkelten Anschläge (3, 4) mehrfach ausbildet sind.

## Claims

1. Method for loading and removing storage material (16) stored in containers, boxes or packages of different sizes by means of a storage and retrieval unit (17) from shelf compartments of a storage shelving system, each being a storage compartment unit (1) arranged on an incline and configured in two parts with a substantially U-shaped cross-section and a stop (3, 4) at their lowest end, in which in order to remove the storage material (16) from the shelf compartment unit (1) and/or to load the shelf compartment unit (1) with storage material (16) the storage and retrieval unit (17) is moved to a side in the longitudinal direction near to the storage compartment unit (1) and the stop (3, 4) is rendered temporarily inactive by the storage and retrieval unit (17), so that the storage material (16) to be removed slides onto a base of a base body (19) of the storage and retrieval unit (17) and against a slide (22) arranged there to be longitudinally displaceable until it (16) reaches a desired position,
**characterised in that** after approach of the storage shelf compartment (1) the stop (3, 4) is rendered inactive by means of a hoisting device (18) provided on the storage and retrieval unit (17) by lifting a storage compartment rail (9) of the storage compartment unit (1), and
after the slide (22) has run back the same storage compartment rail (9) of the storage compartment unit (1) is lowered with the storage material (16) removed from the shelf compartment unit (1), so that the stop (3, 4) holds back the rest of the storage material (16) in the storage compartment unit (1).

2. Method according to claim 1, **characterised in that** different removal speeds are provided.

3. Method according to claim 1 or 2, **characterised in that** removal of the storage material (16) occurs at the bottom at the storage compartment unit (1) and the loading of the storage shelving system occurs by means of a second storage and retrieval unit (17) from the opposing upper end section of the storage compartment unit (1), either simultaneously or consecutively.

4. Method according to claim 1 or 2, **characterised in that** the loading of the storage compartment unit (1) with storage material (16) and the removal of the storage material (16) from same (1) occurs at the upper end section thereof, wherein during removal all goods contained in this storage compartment unit (1) are pushed upwards by the slide (22) and at the same time drop one after the other onto a conveyor belt.

5. Device for loading and removing storage material (16) stored in containers, boxes or packages of different sizes from shelf compartments of a storage shelving system by means of a storage and retrieval unit (17), in which the storage and retrieval unit (17) has
a base body (19) for handling the storage material (16), which (19) is provided with at least one associated side wall (20) and a slide (22) movable in the longitudinal direction of the body thereof, and
a unit (18) for spatial manipulation on the shelf compartments and
mountings are provided on the storage shelf for the shelf compartments, wherein
the shelf compartments, viewed in the longitudinal direction of the body thereof, are groove-like storage compartment units (1) arranged on an incline, of which the front edge located at low level respectively has an associated stop (3, 4), which prevents the storage material (16) from sliding out,
**characterised in that** the storage compartment unit (1) of a storage shelf lies on mountings configured in particular as storage shelf rods (6, 8), wherein the storage compartment unit (1) is configured in two parts and consists of a storage compartment angle piece (2) and a storage compartment rail (9) arranged on the storage compartment angle piece (2), and wherein the storage compartment angle piece (2) and the storage compartment rail (9) have angled off sections (5, 11), by means of which they are fastened to be able to tilt on the storage shelf rod (6).

6. Device according to claim 5, **characterised in that** the storage compartment angle piece (2) has a base surface (7), wherein the angled off section (5) is moulded on at one end thereof for mounting and at the opposite end thereof upwardly angled stops (3, 4) separated by a groove (15) are provided.

7. Device according to claim 5 and 6, **characterised in that** the storage compartment rail (9) consists of a U-shaped rail with a compartment base (10) and side walls (12, 13) projecting downwards at right angles and in the same direction therefrom, wherein on its upper side the compartment base (10) has at least one lug (14) extending in the longitudinal direction of the compartment base (10) and projecting beyond the compartment base (10).

8. Device according to claim 7, **characterised in that** the lug (14) is fastened to the compartment base (10) of the storage compartment rail (9) so that the lug (14) projects downwards and/or projects out of the storage compartment rail at the top and lies in a groove (15) of the compartment angle piece (2).

9. Device according to claim 7, **characterised in that** on its upper side the compartment base (10) has a plurality of lugs (14) extending in the longitudinal direction of the compartment base (10) and projecting beyond the compartment base (10), wherein the upwardly angled stops (3, 4) are configured in multiples on the compartment base (10).

## Revendications

1. Procédé pour charger et décharger, au moyen d'un appareil de desserte de stockage (17), de marchandises contenues dans des récipients, des boîtes ou des emballages de diverses grandeurs, dans les compartiments d'un stockage à rayons constitués chacun par une unité de dépôt (1) inclinée, présentant une section essentiellement en forme de U et à son extrémité basse une butée (3, 4), selon lequel l'appareil de desserte de stockage (17), pour charger et décharger les marchandises (16) dans une unité de dépôt (1) est amené sur un côté de l'unité selon la direction longitudinale de celle-ci, et la butée (3, 4) est désactivée temporairement de manière que la marchandise (16) à retirer glisse sur le fond d'un corps de base (19) de l'appareil de desserte de stockage (17) pour, en appui contre un coulisseau (22) disposé à cet endroit, descendre jusqu'à atteindre une position de consigne, ce procédé présentant les caractéristiques suivantes :
- après approche de l'unité de dépôt (1), un dispositif de levage (18) prévu sur l'appareil de desserte de stockage (17), soulève un rail de dépôt (9) de l'unité de dépôt (1) en rendant ainsi inactive la butée (3, 4), puis après recul du coulisseau (22) accompagné de la marchandise (16) retirée de l'unité de dépôt (1), le rail de dépôt (9) est abaissé de sorte que la butée (3, 4) retient la marchandise (16) qui reste dans l'unité de dépôt (1).

2. Procédé selon la revendication 1, **caractérisé en ce que** des vitesses de déchargement différentes sont prévues.

3. Procédé selon la revendication 1 ou 2, **caractérisé en ce que** le déchargement de la marchandise (16) s'effectue par le bas de l'unité de stockage (1) tandis que le chargement du stockage à rayons au moyen d'un second appareil de desserte de stockage (71) s'effectue par l'extrémité supérieure opposée de l'unité de stockage (1), soit en même temps, soit successivement.

4. Procédé selon la revendication 1 ou 2, **caractérisé en ce que** dans l'unité de stockage (1) de la marchandise (16), son chargement et son déchargement ont lieu par la même extrémité supérieure de cette unité et lors du déchargement, toutes les marchandises contenues dans celle-ci sont glissées vers le haut et tombent successivement sur une bande transporteuse.

5. Dispositif pour charger et décharger des marchandises (16) contenues dans des récipients, des boîtes ou des emballages de diverses grandeurs, dans les compartiments d'un stockage à rayons au moyen d'un appareil de desserte de stockage (7) qui présente, pour manoeuvrer la marchandise, un corps de base (19) comportant au moins une paroi latérale (20) et dans lequel peut se déplacer, selon la direction longitudinale de ce corps, un coulisseau (22), ainsi qu'une unité (18) pour la manipulation dans l'espace sur les rayons avec, sur le stockage à rayons, des supports pour les compartiments qui, observés dans le sens de leur longueur, sont des unités de dépôt (1) en forme de rigoles inclinées dont les bords avant disposés en bas, sont équipés chacun d'une butée (3, 4) empêchant la chute de la marchandise entreposée (16), ce dispositif présentant les caractéristiques suivantes :
- l'unité de dépôt (1) d'un stockage à rayons repose sur des supports ayant notamment la forme de barres de stockage (6, 8) et est constituée de deux éléments, à savoir une cornière de dépôt (2) et sur celle-ci un rail de dépôt (9), ces deux éléments présentant des parties repliées en U (5, 1) par lesquelles ils sont fixés en pouvant basculer, sur les barres de stockage.

6. Dispositif selon la revendication 5, **caractérisé en ce que** la cornière de dépôt (9) présente une surface de base (7) à une extrémité de laquelle est formée la partie repliée (5) servant de palier tandis qu'à l'extrémité opposée sont prévues des butées (3, 4) dressées vers le haut, séparées par une rainure (15).

7. Dispositif selon la revendication 5 ou 6, **caractérisé en ce que** le rail de dépôt (9) est un rail à profilé en U constitué d'un fond de dépôt (10) bordé de parois latérales (12, 13) perpendiculaires à celui-ci, et sur la face supérieure de ce fond se trouve au moins une barrette qui est disposée selon la direction longitudinale de ce fond et qui le dépasse.

8. Dispositif selon la revendication 7, **caractérisé en ce que** la barrette (14) est fixée sur le fond d'accueil (10) du rail de dépôt (9) de manière à faire saillie sur celui-ci vers le bas et/ou vers le haut en passant dans une rainure (15) de la cornière de dépôt (2).

9. Dispositif selon la revendication 7, **caractérisé en ce que** le fond d'accueil (10) porte sur sa face supérieure plusieurs pattes (14) disposées selon sa direction longitudinale en le dépassant, et les butées (3, 4) dressées vers le haut sur le fond sont multiples.
